# EUROPEAN PATENT SPECIFICATION

(11) **EP 1 898 043 B1**
(45) Date of publication and mention of the grant of the patent: **04.04.2012**
(21) Application number: 05774354.4
(22) Date of filing: 13.06.2005
(51) Int. Cl.: E06B 9/76, F16D 3/26, F16D 3/50

(54) **CRANK JOINT**
KURBELGELENK
ARTICULATION POUR MANIVELLE

(43) Date of publication of application: 12.03.2008
(73) Proprietor: Gerhard Geiger GmbH & Co., 74321 Bietigheim-Bissingen (DE)
(72) Inventor: Guillen Chico, Francisco, E-03630 Sax (ES)
(74) Representative: Jeck, Anton
(86) International application number: PCT/ES2005/070091
(87) International publication number: WO 2006/021607

(56) References cited:
- CH-A5- 689 234
- DE-A1- 2 218 614
- ES-A6- 2 017 586
- US-A- 2 792 693
- ANONYMOUS: "Hooke joint steering shaft utilizing 4 components" RESEARCH DISCLOSURE, MASON PUBLICATIONS, HAMPSHIRE, GB, vol. 427, no. 26, November 1999 (1999-11), XP007124999 ISSN: 0374-4353

## Description

### OBJECT OF THE INVENTION

The present invention relates to a hinge for a handle of the type used for example in awnings or blinds. The typical loads applied in the turning couple imply wear of the friction areas of the hinge that significantly shorten the lifetime of the device.

The present invention makes use of a special configuration of an intermediate piece that prevents wear due to friction.

This special configuration of the intermediate piece does not prevent the use of a pressure piston that allows to define different preferred angular positions of the hinge.

In addition to the special configuration of the intermediate piece, the invention is characterised by a reinforcement bushing between the main pin and the moving elements.

### BACKGROUND OF THE INVENTION

Handles commonly employed in mechanisms for raising blinds and the like have small diameters and are hinged, as aesthetic requirements require them to have a small size and occupy a minimum space.

The fact that the diameter of the rods that converge and the hinge be small and that instead of using a rigid rod it uses said hinges to allow the folding lead to severe restrictions when designing the handle.

The use of small diameters increases the loads on the hinge when applying the same couple; the hinge is in fact a weakened part that suffers additional wear due to the friction that is produced in the contact surfaces with relative motion.

Patent with publication number CH689234 is known, which describes a hinged handle that uses tubular elements and an intermediate pin. The internal element of the hinge is an end plate that enters the cavity defined by a groove provided in the tubular body of the second arm which receives it.

The end plate can have one or more flat faces pressured by a piston to determine preferred positions of the angle between the rods that define the hinge.

Among the options considered by the invention of said patent CH689234 are the relative sliding of the various surfaces in contact with the pin, or that the friction in the rotation of the hinge take place between the pin and the internal plate of the first arm, or that the direction in the rotation of the hinge take place between the pin and the orifice of the second arm. This general schema allows several configurations regarding the pin retention, for example.

Also cited in Spanish Patent with publication number ES2017586, in which the wear between the pin and the internal plate is reduced by the presence of a reinforcement bushing.

In both patents there is a clearance between the two arms that forces the main forces to concentrate on the area of contact with the pin.

Further, a hinge for a handle is known by the article "Hooke joint steering shaft utilizing 4 components" in Research Disclosure, Mason Publications, Hampshire, GB, vol. 427, no. 26, Nov. 1999, which hinge is constituted according to the preamble of claim 1. The two plates and the rod of the intermediate piece are constituted by a rounded lower yoke and a rounded upper yoke which are interconnected to a circular body. This circular body is connected to the second arm which is constituted by a pole. The intermediate piece has an outer curve which is adapted to the inner curve of the circular body.

The additional piece reduces the friction between the surfaces that may come in contact with each other and which have a relative motion between them. The clearance between the various parts that configure the hinge between the two arms will be reduced, constituting additional supporting areas so that the surface in contact with the pin reduces the tension.

The aim of the invention consists in that different preferred angular positions of the hinge should be allowed. This aim will be achieved by the features of claim 1. They allow the passage of the rear piston without hindering its action on the faces of the imternal plate of the first arm.

### DESCRIPTION OF THE INVENTION

The present invention consists of a hinge for a handle that uses an additional piece meant to reduce friction. This additional piece is placed between the internal plate of a first arm (which may be called the primary arm) and the tubular body of the second arm (which can be called a secondary arm) especially configured to achieve several goals.

With respect to each arm, the first arm can be considered a conventionally solid body that must end at an end plate.

This plate is meant to enter the end of the second arm constituted by a tubular rod provided with a groove.

The groove of the tubular body gives rise to two curved segments that leave two small spaces on the inside. If the tube has a circular internal and external section the spaces will have a circular arc section; if internally the tube has a polygonal section the spaces will have a section defined by straight lines.

The hinge incorporates an intermediate piece between the two arms, which mainly consists of two parallel plates connected to each other.

The plates absorb the friction between the flat faces of the plate of the first arm and those generated by the groove of the second arm. In addition, in its central part each of the plates is thickened to cover the inner spaces of the internal curved ends of the tubular secondary arm.

The connection between the plates is provided by two lateral extensions, such that the orifice of the tubular body of the secondary arm is not occluded.

As the tubular body is not closed, it is possible to incorporate in the hollow arm a piston that, driven by a rear spring, exerts a pressure on the edge of the plate of the primary arm. The presence of flat faces on the end of the primary arm's plate determines certain preferred angles, such as those corresponding to a blinds actuation arm that is fully extended or forming angles of 90° to configure the actuation handle.

Segments connecting the two plates also prevent the direct contact of one arm with he other when a very closed obtuse angle is forced. This contact takes place with a material that reduces friction, so that wear is avoided in this situation.

Although the presence of an intermediate piece eliminates the quick wear due to friction that occurs when two parts of, for example, aluminium are in contact, the contact of the pin with each arm must still be addressed. Although the intermediate piece reduces the locking of the shaft pin and the pieces enveloping it, in both arms, the present invention considers the inclusion of bushings to receive the pin.

### DESCRIPTION OF THE DRAWINGS

The present descriptive memory is accompanied by a set of drawings that illustrate the preferred example and in no way limit the invention.
Figure 1 shows an exploded perspective view of a specific embodiment of the invention representing of the hinge the ends of the connected arms, the intermediate piece, a reinforcement bushing of the primary end and the pin that connects the assembly.
Figure 2 is a longitudinal section along the mid plane of the hinge of the same embodiment showing all of its component parts.

### PREFERRED EMBODIMENT OF THE INVENTION

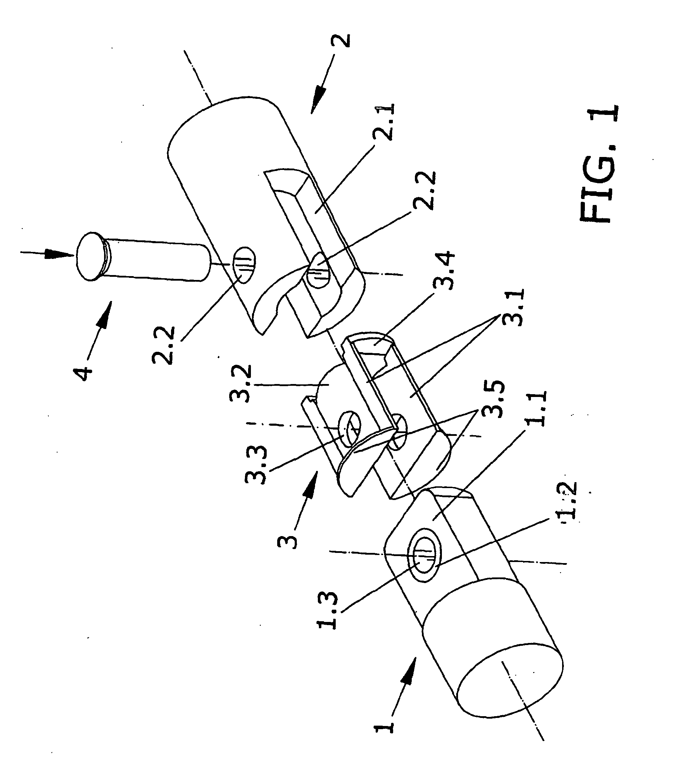

Figure 1 is an exploded perspective view of the hinge according to an example of embodiment in which two arms are provided, one known as the primary arm (1) and another known as the secondary arm (2) for purposes of illustration only, as the two arms are equally important.

The primary arm (1) in this case is made of aluminium, is solid and ends at the end that is hinged on a plate (1.1) with an essentially rectangular plan and rounded corners. There is a cheaper configuration that uses a tubular body for the primary arm (1), where at its end the plate (1.1) is obtained by flattening the end and cropping to obtain the desired faces.

This plate (1.1) has a drilled orifice (1.3) reinforced with a bushing (1.2) that prevents the wear by friction with the pin (4). The union of the bushing (1.2) with its housing is improved by a bend that substantially increases the contact surface.

The secondary arm (2) in this example is also made of aluminium and is constituted by a tubular body on the hinged end of which is a groove (2.1) and a double orifice (2.2) with its axis perpendicular to the plane of the groove (2.1) that allows passage of the pin (4).

The groove (2.1) receives the intermediate piece (3), which in turn receives the end plate (1.1) of the primary arm (1). In this way the intermediate piece (3) will be placed between one arm (1) and the other arm (2); and in the relative motion of the rotation of the hinge the friction of the surfaces in contact of the ends of the arms (1, 2) always takes place on the intermediate piece (3).

Said intermediate piece (3) is made of a material that reduces friction and that suffers a greatly reduced wear due to said friction. In this example of embodiment of the invention a polyamide is used.

The intermediate piece (3) is essentially constituted by two plates (3.1) meant to be placed above and below the plate (1.1) of the primary arm (1), suffering friction with the upper and lower faces of said plate (1.1).

The two plates (3.1) are connected by two lateral rods (3.4) that are fitted in the base of the groove (2.1) of the secondary rod (2). This is the only connection between the two plates (3.1).

Said rods (3.4) leave an opening between them that does not obstruct the inner space of the tubular body of the secondary rod (2). In turn, when the primary rod (1) turns on the hinge to its maximum angle, it does so on the rod (3.4) of the intermediate piece that is disposed on the closing angle against which it stops, preventing the direct contact of the arms (1, 2).

Each plate (3.1), as shown in figure 1, has a central thickening (3.2) meant to fill al of the cavity left between the plate (3.1) if it is flat and the concave inner face of the secondary arm (2). In this example the thickening (3.2) has a circular section; however, if the secondary arm (2) has an inner space with a polygonal section the thickening (3.2) will also be polygonal with a configuration matching that of the space to be filled.

Figure 1 also shows a half moon (3.5) in the edge of the plate (3.1) that allows to cover the front part of the secondary arm (2). In this way, even if the secondary arm (2) does not have a good frontal finish it will be covered by the half moon (3.5). Although it is referred to as a half moon (3.5), this plate must be adjusted to the configuration of the front of the secondary arm (2).

In turn, the intermediate part has two orifices (3.3), one orifice (3.3) for each plate (3.2), to allow passage of the pin (4) that joins the assembly. It is possible to use front grooves instead of orifices to allow the passage of the pin (4), thereby constituting an open cavity.

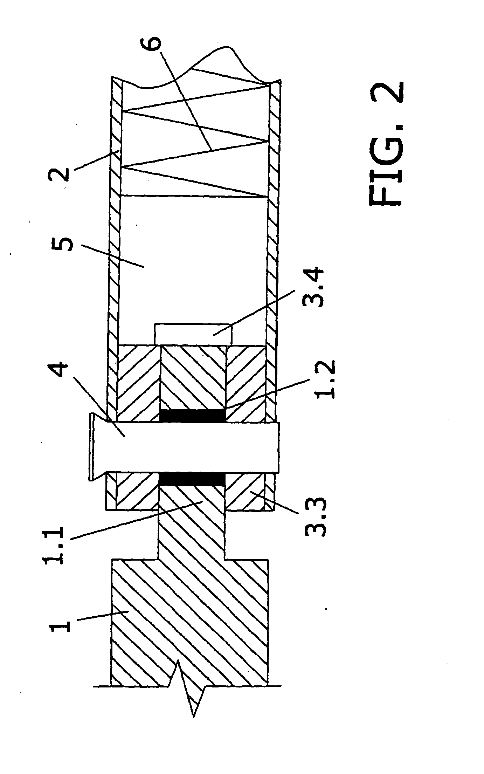

Figure 2 shows a section along a mid plane that divides the hinge through the pin (4) with the arms (1, 2) extended. This section includes a piston (5) as well as a rear spring (6) that presses on the piston (5).

The piston (5) is housed inside the secondary arm (2) that in turn acts as a guide and applies its force on the free edge of the plate (1.1), which is accessible through the rear opening defined between the rods (3.4) of the intermediate piece (3).

The spring (6) will rest on either a rear support or on another piston (5) that will in turn act on an opposite hinge.

The pressure of the piston (5) on the flat faces that constitute the edge of the plate (1.1) of the end of the primary arm (1) causes the hinge to seek, for its stability, essentially as many preferred positions as there are flat faces accessible to the piston (5). The term essentially is used because it is possible to find odd positions with the arm (1, 2) turned to its maximum angle that are also included in this stability position. The rounded edges of the plate (1.1) of the primary arm (1) allow passing from one position to the next.

The essence of this invention is not affected by variations in the materials, shape, size and arrangement of the component elements, described in a nonlimiting manner that should allow its reproduction by an expert.

## Claims

1. Hinge for a handle constituted by a primary arm (1) and a secondary arm (2), the primary arm ending at a plate (1.1) with an orifice (1.3) and the secondary arm (2) being a hollow tubular body, with a groove (2.1) and orifice (2.2) in a position perpendicular to the main plane of the groove (2.1) in which all the orifices are meant to house a pin (4) and in which the primary arm (1) and the secondary arm (2) use an intermediate piece (3) essentially constituted by two plates (3.1) connected to each other by lateral and rear rods (3.4) that are set against the base of the groove (2.1) of the secondary arm (2) to reduce friction, wherein the, secondary arm (2) comprises a hollow tubular body with a cylindrical cavity which runs longitudinally with the second arm (2) and houses a piston (5) that is pressed by a rear spring (6) wherein the piston (5) presses in turn the faceted edge of the plate (1.1) of the primary arm which is accessible to it through the opening defined by the lateral rods (3.4) of the intermediate body (3) that gives rise to various preferred angular positions of the two arms (1, 2).

2. Hinge for a handle according to claim 1 **characterised in that** the intermediate piece (3) has a central thickening (3.2) on its plates (3.1) that fills the cavity defined by the inner surface of the end of the hollow secondary arm (2).

3. Hinge for a handle according to claim 2 **characterised in that** the inner space of the tubular body of the secondary arm (2) has a circular section and the central thickening (3.2) of the intermediate piece (3) has a circular arc shape that matches the space.

4. Hinge for a handle according to claim 2 **characterised in that** the inner space of the tubular body of the secondary arm (2) has a polygonal section and the central thickening (3.2) of the intermediate piece (3) has straight segments matching the cavity.

5. Hinge for a handle according to claim 2 **characterised in that** the thickening (3.2) has on the edge of its end a half moon (3.5) to cover the front of the secondary arm (2).

6. Hinge for a handle according to claim 1 **characterised in that** the intermediate piece (3) has an orifice (3.3) to allow passage of the pin (4).

7. Hinge for a handle according to claim 1 **characterised in that** the intermediate piece (3) has a front groove to allow passage of the pin (4).

8. Hinge for a handle according to claim 1 **characterised in that** the plate (1.1) of the primary arm (1) has a reinforcement bushing (1.2).

9. Hinge for a handle according to claim 7 **characterised in that** the bushing (1.2) is bent.

## Patentansprüche

1. Gelenk für eine Kurbel, die durch einen Primärarm (1) und einen Sekundärarm (2) gebildet ist, wobei der Primärarm in einer Platte (1.1) mit einer Öffnung (1.3) endet und der Sekundärarm (2) ein hohler, rohrförmiger Körper ist und eine Nut (2.1) sowie Öffnungen (2.2) in einer Position aufweist, die senkrecht zur Hauptebene der Nut (2.1) steht, wobei alle Öffnungen dazu dienen, einen Stift (4) aufzunehmen und wobei der Primärarm (1) und der Sekundärarm (2) ein Zwischenstück (3) verwenden, das im Wesentlichen aus zwei Platten (3.1) gebildet ist, die miteinander durch seitliche und hintere Stäbe (3.4) verbunden sind, die gegen die Basis der Nut (2.1) des Sekundärarms (2) zur Reibungsverminderung gesetzt sind,
**dadurch gekennzeichnet,**
**dass** der Sekundärarm (2) einen hohlen, rohrförmigen Körper mit einem zylindrischen Innenraum aufweist, der in Längsrichtung des Sekundärarms (2) verläuft und in seinem Innenraum einen Kolben (5) aufnimmt, der mittels einer Rückfeder (6) gedrückt wird, wobei der Kolben (5) wiederum die Hinterseite der Platte (1.1) des Primärarms (1) drückt und wobei diese Hinterseite für den Kolben durch die Öffnung zugänglich ist, die durch die Seitenstäbe (3.4) des Zwischenstücks (3) gebildet wird, so dass eine Zunahme von verschiedenen, bevorzugten Winkelpositionen der beiden Arme (1, 2) erzielt wird.

2. Gelenk für eine Kurbel nach Anspruch 1,
**dadurch gekennzeichnet,**
**dass** das Zwischenstück (3) eine Mittenverdickung (3.2) in ihren Platten (3.1) aufweist, die einen Hohlraum ausfüllt, der durch die Innenfläche des Endes des hohlen Sekundärarms (2) definiert ist.

3. Gelenk für eine Kurbel nach Anspruch 2,
**dadurch gekennzeichnet,**
**dass** der Innenraum des rohrförmigen Körpers des Sekundärarms (2) einen runden Querschnitt und die Mittenverdickung (3.2) des Zwischenstücks (3) eine runde Bogenform aufweist, die an den Innenraum angepasst ist.

4. Gelenk für eine Kurbel nach Anspruch 2,
**dadurch gekennzeichnet,**
**dass** der Innenraum des rohrförmigen Körpers des Sekundärarms (2) einen vieleckigen Querschnitt und die Mittenverdickung (3.2) des Zwischenstücks (3) gerade Abschnitte aufweist, die an den Innenraum angepasst sind.

5. Gelenk für eine Kurbel nach Anspruch 2,
**dadurch gekennzeichnet,**
**dass** die Mittenverdickung (3.2) an der Kante ihres Endes einen Halbmond (3.5) aufweist, der die Vorderseite des Sekundärarms (2) abdeckt.

6. Gelenk für eine Kurbel nach Anspruch 1,
**dadurch gekennzeichnet,**
**dass** das Zwischenstück (3) eine Öffnung (3.3) zum Durchgang des Stifts (4) aufweist.

7. Gelenk für eine Kurbel nach Anspruch 1,
**dadurch gekennzeichnet,**
**dass** das Zwischenstück (3) eine Frontnut für den Durchgang des Stifts (4) aufweist.

8. Gelenk für eine Kurbel nach Anspruch 1,
**dadurch gekennzeichnet,**
**dass** die Platte (1.1) des Primärarms (1) eine Verstärkungshülse (1.2) aufweist.

9. Gelenk für eine Kurbel nach Anspruch 7,
**dadurch gekennzeichnet,**
**dass** die Hülse (1.2) gebogen ist.

## Revendications

1. Articulation destinée à une manivelle constituée d'un bras primaire (1) et d'un bras secondaire (2), le bras primaire se terminant au niveau d'une plaque (1.1) comportant un orifice (1.3) et le bras secondaire (2) étant un corps tubulaire creux, comportant une rainure (2.1) et un orifice (2.2) dans une position perpendiculaire au plan principal de la rainure (2.1) où tous les orifices sont destinés à recevoir une broche (4) et où le bras primaire (1) et le bras secondaire (2) utilisent une pièce intermédiaire (3) constituée essentiellement de deux plaques (3.1) reliées l'une à l'autre par des tiges latérales et arrière (3.4) qui sont disposées contre la base de la rainure (2.1) du bras secondaire (2) pour réduire le frottement, dans laquelle
le bras secondaire (2) comprend un corps tubulaire creux ayant une cavité cylindrique qui s'étend longitudinalement avec le deuxième bras (2) et loge un piston (5) qui est comprimé par un ressort arrière (6) où le piston (5) comprime à son tour le bord à facettes (1.1) du bras primaire auquel il est possible d'accéder à travers l'ouverture définie par les tiges latérales (3.4) du corps intermédiaire (3) qui permet de créer diverses positions angulaires préférées des deux bras (1, 2).

2. Articulation destinée à une manivelle selon la revendication 1, **caractérisée en ce que** la pièce intermédiaire (3) comporte un renflement central (3.2) sur ses plaques (3.1) qui remplit la cavité définie par la surface intérieure de l'extrémité du bras secondaire creux (2).

3. Articulation destinée à une manivelle selon la revendication 2, **caractérisée en ce que** l'espace intérieur du corps tubulaire du bras secondaire (2) comporte une section circulaire et le renflement central (3.2) de la pièce intermédiaire (3) présente une forme d'arc circulaire qui correspond à l'espace.

4. Articulation destinée à une manivelle selon la revendication 2, **caractérisée en ce que** l'espace intérieur du corps tubulaire du bras secondaire (2) présente une section polygonale et le renflement central (3.2) de la pièce intermédiaire (3) présente des segments rectilignes correspondant à la cavité.

5. Articulation destinée à une manivelle selon la revendication 2, **caractérisée en ce que** le renflement (3.2) présente sur le bord de son extrémité une demi-lune (3.5) pour couvrir la face avant du bras secondaire (2).

6. Articulation destinée à une manivelle selon la revendication 1, **caractérisée en ce que** la pièce intermédiaire (3 comporte un orifice (3.3) pour permettre le passage de la broche (4).

7. Articulation destinée à une manivelle selon la revendication 1, **caractérisée en ce que** la pièce intermédiaire (3) comporte une rainure avant pour permettre le passage de la broche (4).

8. Articulation destinée à une manivelle selon la revendication 1, **caractérisée en ce que** la plaque (1.1) du bras primaire (1) comporte une douille de renfort (1.2).

9. Articulation destinée à une manivelle selon la revendication 7, **caractérisée en ce que** la douille (1.2) est courbe.
